Europäisches Patentamt

European Patent Office

Office européen des brevets

(19)

(11) **EP 0 773 146 A2**

(12) **EUROPÄISCHE PATENTANMELDUNG**

(43) Veröffentlichungstag:
14.05.1997 Patentblatt 1997/20

(51) Int. Cl.⁶: **B60R 21/26**

(21) Anmeldenummer: 96117808.4

(22) Anmeldetag: 07.11.1996

(84) Benannte Vertragsstaaten:
**DE ES FR GB IT SE**

(30) Priorität: **09.11.1995 DE 19541798**

(71) Anmelder: **TEMIC Bayern-Chemie Airbag GmbH**
**D-84544 Aschau (DE)**

(72) Erfinder:
• **Fürst, Franz**
**84553 Mühldorf (DE)**

• **Maier, Lothar**
**84577 Tüssling (DE)**
• **Unterforsthuber, Karl**
**82041 Oberhaching (DE)**

(74) Vertreter: **Maute, Hans-Jürgen, Dipl.-Ing.**
**TEMIC TELEFUNKEN microelectronic GmbH**
**Postfach 35 35**
**74025 Heilbronn (DE)**

(54) **Gasgenerator mit Regelung des Treibgasstromweges und Verfahren zu seinem Betrieb**

(57)    Ein Gasgenerator eines Aufprallschutzsystems für Fahrzeuginsassen, der ein unter Druck stehendes Treibgas zum Aufblasen des Luftsackes eines Airbagsystems erzeugt, welches durch einen Filter und eine Ausströmöffnung in den Luftsack gelangt, ist dadurch gekennzeichnet, daß auf dem Weg des Treibgases eine Umlenkvorrichtung zur Beeinflussung des Strömungsweges vorgesehen ist. Mit dem erfindungsgemäßen Gasgenerator kann im Hinblick auf einen optimalen Insassenschutz mit besonders einfachen Mitteln die Leistung des Airbagsystems abhängig von der Umgebungstemperatur individuell auf die aufzufangende kinetische Energie des zu schützenden Fahrzeuginsassen abgestimmt werden.

FIG. 1

EP 0 773 146 A2

## Beschreibung

Die Erfindung betrifft einen Gasgenerator eines Aufprallschutzsystems für Fahrzeuginsassen, der ein unter Druck stehendes Treibgas zum Aufblasen des Luftsackes eines Airbagsystems erzeugt.

Ein solcher Gasgenerator ist beispielsweise bekannt aus der DE 40 05 871 C2.

Im Falle eines Fahrzeugcrash erzeugen sogenannte Airbag-Gasgeneratoren Gas zum Füllen eines Luftsackes, der dann die Fahrzeuginsassen vor dem Aufprall auf harte Fahrzeuginnenteile wie das Lenkrad schützt. Physikalisch gesehen passiert dabei nichts anderes, als daß der durch den Fahrzeugcrash beschleunigte Insasse durch den relativ weichen Luftsack abgebremst bzw. aufgefangen wird. Dieses Auffangen geschieht dabei dadurch, daß Gasmasse durch Entlüftungsöffnungen (sogenannte Ventholes) aus dem Airbag strömt. Demnach hat der Airbag die Aufgabe, die kinetische Energie des Insassen auf einem kurzen weg möglichst "weich" abzubauen.

Heutige Airbagkonzepte verwenden meist Gasgeneratoren pyrotechnischer Art, wie sie beispielsweise aus der eingangs zitierten DE 40 05 871 C2, der DE 40 12 893 A1 oder der DE 41 35 299 A1 bekannt sind. Pyrotechnische Gasgeneratoren funktionieren im allgemeinen derart, daß durch einen Stromimpuls von der einen Fahrzeugcrash erkennenden Sensorik ein Anzünder im Gasgenerator gezündet wird. Diese Anzündung wird durch eine sogenannte Anzündladung, die heiße Partikel erzeugt, verstärkt. Diese heißen Partikel treffen dann auf die Oberfläche des meist in Tablettenform vorliegenden Treibstoffes, der dann selbst zündet und in der sogenannten Brennkammer unter Entwicklung eines hohen Druckes und einer hohen Temperatur abbrennt. Dadurch entsteht das Gas zum Füllen des Luftsackes. Da neben reinem Gas auch noch flüssige bzw. feste Bestandteile bei der Verbrennung entstehen, wird der Gasstrom durch entsprechende Filter in einer Filterkammer vor Austritt aus dem Gasgenerator gereinigt. Beim Durchströmen der Filter wird der Gasstrom zusätzlich gekühlt.

Wichtig dabei ist, daß es immer zu einem vollständigen Abbrand kommt, und daher immer die gleiche Menge Gas erzeugt wird, wenn der Treibstoffabbrand einmal in Gang gesetzt worden ist. Des weiteren wird die Temperatur des erzeugten Gases im wesentlichen nur durch die bei Zündung des Gasgenerators herrschende Umgebungstemperatur beeinflußt. Denn die Filter bleiben unverändert und kühlen daher den Gasstrom immer in gleicher Weise. Dies bedeutet nichts anderes, als daß die Auffangwirkung des Airbagsystems im wesentlichen durch die Umgebungstemperatur beeinflußt wird.

Neben diesen pyrotechnischen Gasgeneratoren werden auch Hybrid-Gasgeneratoren eingesetzt, bei denen das Treibgas in einem Druckgasbehälter gespeichert wird, der mittels einer Berstmembran verschlossen ist. Im Falle eines Fahrzeugcrash wird mittels einer Anzündladung ein heißes Gas erzeugt, das auf diese Berstmembran gerichtet wird und dieselbe thermisch öffnet. Anschließend tritt das gespeicherte kalte Treibgas aus dem Druckbehälter aus, und vermischt sich mit dem von der Anzündladung erzeugten Heißgas in einem Diffusorraum. Dieses Mischgas wird über einen in einer Filterkammer angeordneten Filter in den Luftsack des Airbagsystems geleitet.

Auch bei einem solchen Hybrid-Gasgenerator ist es wichtig, daß immer die gleiche Menge an Gas erzeugt wird. Da jedoch der größe Anteil des Treibgases aus dem Druckbehälter stammt, und die Temperatur des gespeicherten Gases von der Umgebungstemperatur abhängt, wird auch in gleicher Weise die Auffangwirkung des Airbagsystems im wesentlichen durch die Umgebungstemperatur beeinflußt.

Ein drittes Airbagsystem verwendet sogenannte Flüssiggas-Gasgeneratoren, die einen mit Flüssiggas befüllten Druckgasbehälter aufweisen. Zur Auslösung des Gasgenerators wird das als verbrennbare und gasentwickelnde Flüssiggas mittels einer Anzündladung angezündet, wobei das dabei entstehende Druckgas aus dem Druckbehälter in eine Diffusorkammer austritt und anschließend über einen in einer Filterkammer angeordneten Filter in den Luftsack des Airbagsystems gelangt.

Bei einem solchen Flüssiggas-Gasgenerator wird die Temperatur des erzeugten Gases ebenfalls im wesentlichen nur durch die bei Zündung des Gasgenerators herrschende Umgebungstemperatur beeinflußt, da die zur Kühlung verwendeten Filter den Gasstrom immer in gleicher Weise kühlen.

Daneben hängt die aufzufangende kinetische Energie des Insassen von ganz anderen Parametern, wie Crashgeschwindigkeit, Gewicht des Insassen, Größe des Insassen, Sitzposition, Gurt angelegt ja/nein, etc. ab.

Deshalb sollte im Hinblick auf einen optimalen Insassenschutz die Leistung des Airbagsystems und demzufolge die Masse und/oder die Temperatur des vom Gasgenerator erzeugten Gases auf die aufzufangende kinetische Energie abgestimmt sein. Betrachtet man hierzu in erster Näherung das ideale Gasgesetz

$$p * V = m * R * T$$

mit

p =     Druck im Luftsack
V =     Volumen im Luftsack
m =     Gasmasse im Luftsack
R =     Gaskonstante
T =     Temperatur des Gases

und nimmt man zunächst an, daß V, m und R in dem betrachteten Fall als weitgehend konstant angesehen werden können, dann ist der wesentliche Einflußfaktor für den Druck im Luftsack die Gastemperatur.

Wie bereits erwähnt, wird der Gasstrom im Gasgenerator durch Filtereinbauten gekühlt und gereinigt. Dabei hängt der Kühleffekt unter anderem von der Masse und der Temperatur der Filtereinbauten und der Verweilzeit des Gasstromes im Filter ab. Die Verweilzeit des Treibgases im Filter bestimmt sich wiederum aus der Länge des weges, den das Gas beim Durchströmen durch den Filter zurücklegen muß. Wenn theoretisch die Temperatur der Filtereinbauten gleich der Gastemperatur ist oder wenn das Gas den Filter gar nicht durchströmt, dann kann keine Kühlung des Gasstromes durch die Filtereinbauten erfolgen. Daher hängt der Kühleffekt einerseits von der Temperaturdifferenz zwischen Filtereinbauten und Gasstromtemperatur, andererseits von der Länge des Gasweges durch den Filter ab.

Aus dem Artikel "Erhöhung der Insassensicherheit durch Airbag und Gurtstrammer" von Luigi Brambilla in ATZ Automobiltechnische Zeitschrift 84 (1982) 2, Seiten 77 bis 81 ist zwar bekannt, daß durch mehrlagige Metallfilter eine günstige Gasabkühlung und Gassäuberung erreicht wird, so daß ein relativ sauberes und temperiertes Gas in den Luftsack gelangt. Die oben beschriebene Abhängigkeit der Auffangwirkung des Airbagsystems von der Umgebungstemperatur wird dabei aber nicht berücksichtigt.

Aufgabe der vorliegenden Erfindung ist demgegenüber, einen Gasgenerator mit den eingangs geschilderten Merkmalen vorzustellen, bei dem im Hinblick auf einen optimalen Insassenschutz die Leistung des Airbagsystems abhängig von der Umgebungstemperatur individuell auf die aufzufangende kinetische Energie des aktuell zu schützenden Fahrzeuginsassen abgestimmt werden kann, wobei der Aufbau gegenüber bekannten Gasgeneratoren ohne Temperaturbeeinflussung nicht komplizierter und nur unwesentlich aufwendiger wird und wobei die äußeren Abmessungen des Gasgenerators genau denen von bekannten Systemen entsprechen.

Erfindungsgemäß wird diese komplexe Aufgabe auf ebenso wirkungsvolle wie überraschend einfache Art und weise dadurch gelöst, daß auf dem Weg des Treibgases in den Luftsack eine Umlenkvorrichtung zur Beeinflussung des Strömungsweges des strömenden Treibgases vorgesehen ist.

Das erfindungsgemäße Prinzip ermöglicht es, den Weg des Gasstromes durch den Filter zu verlängern oder zu verkürzen. Bei dem erfindungsgemäßen Gasgenerator kann daher die für den Druck im Luftsack wesentliche Treibgastemperatur variabel gehalten werden und durch entsprechende Ansteuerung der Umlenkvorrichtung innerhalb großer Grenzen variieren.

Auf diese weise können unterschiedliche Füllgrade des Luftkissens erzeugt und somit die Auffangwirkung optimal auf die tatsächliche kinetische Energie des jeweiligen Insassen abgestimmt werden. Der deutliche Einfluß der Umgebungstemperatur auf die Leistungen des Airbagsystems kann durch das erfindungsgemäße Prinzip entscheidend vermindert werden. Die Umlenkvorrichtung selbst kann durch ihren Einbau in die Filterkammer oder außerhalb der Filterkammer so gestaltet werden, daß sie die äußeren Abmessungen des Gasgenerators nahezu nicht verändert. Auch ist es möglich, bereits vorhandene Gasgeneratoren erfindungsgemäß mit der Umlenkvorrichtung zur Beeinflussung des Strömungsweges des Treibgases durch den Filter auf einfache und kostengünstige Weise nachzurüsten.

Besonders bevorzugt ist eine Ausführungsform des erfindungsgemäßen Gasgenerators, bei der die Umlenkvorrichtung eine Steuerungseinrichtung aufweist, die in Abhängigkeit von Signalen aus einem oder mehreren externen Sensoren die Umlenkvorrichtung veranlaßt, das vorbeiströmende Treibgas auf einem entsprechend längeren oder kürzeren Strömungsweg durch den Gasgenerator, vorzugsweise durch den Filter zu lenken. Damit ist eine besonders gute und automatische Einstellung des Systems auf die aktuellen Erfordernisse aufgrund der individuellen Parameter des jeweils zu schützenden Fahrzeuginsassen möglich.

Bei einer vorteilhaften Weiterbildung dieser Ausführungsform ist ein Temperatursensor mit der Steuerungseinrichtung verbunden, der in Abhängigkeit von der Umgebungstemperatur des Airbagsystems elektrische oder mechanische Signale an die Steuerungseinrichtung abgibt. Auf diese Weise kann insbesondere die Umgebungstemperatur als wichtiger Parameter in die Steuerung des Aufblasverhaltens des Airbagsystems einbezogen werden.

Besonders einfach, unaufwendig und preiswert herzustellen ist eine Weiterbildung, bei der der Temperatursensor ein Bimetallelement umfaßt.

Bevorzugt ist auch eine Weiterbildung, bei der ein Gewichtssensor mit der Steuerungseinrichtung verbunden ist, der in Abhängigkeit vom jeweiligen Gewicht des hinter dem Aufprallschutzsystem sitzenden Fahrzeuginsassen Signale an die Steuerungseinrichtung abgibt.

Ebenso vorteilhaft ist eine Weiterbildung, bei der ein Positionssensor mit der Steuerungseinrichtung verbunden ist, der in Abhängigkeit von der jeweiligen Sitzposition, insbesondere in Abhängigkeit der Position des Kopfes des hinter dem Aufprallschutzsystem sitzenden Fahrzeuginsassen Signale an die Steuerungseinrichtung abgibt.

Durch die Verwendung sowohl eines Gewichts- als auch eines Positionssensors kann vorteilhafterweise die genaue kinetische Energie des Insassenkopfes beim Auftreffen auf das Luftkissen ermittelt werden, so daß damit eine optimale Einstellung der Auffangwirkung des Airbagsystems ermöglicht wird.

Die erfindungsgemäße Umlenkvorrichtung kann mit Vorteil bei einem pyrotechnischen Gasgenerator eingesetzt werden, dessen Treibgas in einer Brennkammer mittels eines brennbaren und gasentwickelnden Materials erzeugt wird. Dabei wird auf dem weg des Treibgases zwischen den Austrittsöffnungen der Brennkammer und dem Luftsack die Umlenkvorrichtung angeordnet. Vorzugsweise ist die Umlenkvorrichtung zwischen den Brennkammeraustrittsöffnungen und dem in der Filterkammer angeordneten Filter angebracht.

Andererseits kann auch bei einem solchen pyrotechnischen Gasgenerator die erfindungsgemäße Umlenkvorrichtung auch zwischen dem in der Filterkammer angeordneten Filter und entweder vor den Filterkammerausströmöffnungen oder im Anschluß an dieselben außerhalb der Filterkammer angeordnet werden.

Eine besondere Ausführungsform des erfindungsgemäßen Gasgenerators enthält eine rohrförmige Filterkammer, bei der das Treibgas einen direkten Gasströmungsweg radial durch den Filter und die Filterkammeraustrittsöffnungen in den Luftsack nehmen kann oder das Treibgas über einen indirekten Gasströmungsweg in axialer Richtung durch den Filter und anschließend radial durch Filterkammeraustrittsöffnungen in den Luftsack einströmen kann. Hierbei ist die Umlenkvorrichtung derart ausgebildet, daß entweder der direkte Gasströmungsweg oder der indirekte Gasströmungsweg freigegeben wird.

Besonders bevorzugt ist eine Ausführungsform des erfindungsgemäßen Gasgenerators, bei der die Umlenkvorrichtung eine in der Filterkammer zwischen der Austrittsöffnung aus der Brennkammer und dem Filter angeordnete bzw. zwischen dem Filter und den Filteraustrittsöffnungen oder außerhalb vor diesen Filteraustrittsöffnungen angeordnete, parallel zur Filteroberfläche verschiebbare Platte umfaßt, die weder an der Austrittsöffnung noch an dem Filter anliegt, und die in einer Extremstellung einen direkten Gasströmungsweg zwischen Austrittsöffnung und Filter vollständig versperrt und in einer anderen Extremstellung den direkten Gasströmungsweg zwischen Austrittsöffnung und Filter vollständig freigibt. Auf diese Weise kann der Gasströmungsweg mit besonders einfachen Mitteln entsprechend den aktuellen Anforderungen gesteuert werden.

Eine vorteilhafte Weiterbildung dieser Ausführungsform zeichnet sich dadurch aus, daß die Platte mittels einem einseitig zwischen der Platte und einer Innen- bzw. Außenwand der Filterkammer angeordneten Federelement in einer den direkten Gasströmungsweg vollständig versperrenden Ruhelage gehalten wird, und daß eine Zugvorrichtung vorgesehen ist, mit der die Platte in jede beliebige Zwischenstellung dieser Ruhelage und der anderen Extremstellung, in welcher der direkte Gasströmungsweg vollständig freigegeben ist, verschoben werden kann. Ohne Betätigung der Zugvorrichtung befindet sich daher die Platte immer in einer definierten Ruhelage, bei der ein extrem großer Durchströmungsweg des Treibgases durch den Filter realisiert wird.

Bei einer besonders einfachen Weiterbildung umfaßt die Zugvorrichtung einen von außen ansteuerbaren, vorzugsweise in der Brennkammer bzw. außerhalb des Gasgenerators angeordneten Elektromagneten. Bei Stromdurchfluß durch den Elektromagneten wird ein Magnetfeld aufgebaut und dadurch eine Kraft auf die Platte derart ausgeübt, daß ihre vertikale Lage in der Filterkammer entsprechend verändert wird. Wird der Magnet abgeschaltet, so nimmt die Platte aufgrund der Federbelastung wieder ihre ursprüngliche Lage ein. Je nach Stromfluß durch den Magneten können damit kontinuierlich sämtliche Zwischenstellungen zwischen den beiden Extremlagen der Platte und damit zwischen einem minimalen und einem maximalen Gasströmungsweg durch den Filter angefahren werden. Damit läßt sich auf besonders einfache Weise eine individuelle, unterschiedliche Abkühlung des Treibgasstromes einstellen.

Besonders bevorzugt ist auch eine Ausführungsform, bei der der Gasgenerator ringförmig aufgebaut und die Platte als ein die ringförmige Brennkammer, den ringförmigen Filter bzw. die ringförmige Filterkammer umgebendes Rohrstück ausgebildet ist. Einen derartig ringförmigen Aufbau weisen viele herkömmliche Gasgeneratoren für Airbagsysteme, beispielsweise auch der in der eingangs zitierten Druckschrift beschriebene Gasgenerator auf.

Um Masse und damit Gewicht einzusparen, kann bei einer Weiterbildung dieser Ausführungsform das Rohrstück an denjenigen Stellen seines Umfangs, die nicht einer Austrittsöffnung gegenüberliegen, großflächige Ausnehmungen aufweisen. Durch das eingesparte Gewicht wird auch die Reaktionszeit des Systems beim Herausfahren des Rohrstückes aus seiner Ruhelage in die gewünschte Endlage bedeutend verkürzt.

Ganz besonders bevorzugt ist eine Ausführungsform des erfindungsgemäßen Gasgenerators, bei der auf dem Weg des Treibgases zwischen der Brennkammer und dem Luftsack eine Heizvorrichtung zur Temperierung des vorbeiströmenden Treibgases vorgesehen ist. Durch die zusätzliche Temperierung des Treibgases kann die Temperatur desselben und damit das Aufblasverhalten des Airbagsystems innerhalb noch viel größerer Grenzen variiert werden.

Vorteilhaft ist eine Weiterbildung dieser Ausführungsform, bei der die Heizvorrichtung elektrisch aufheizbare Heizelemente umfaßt. Durch die Verwendung von elektrischer Energie zum Aufheizen des Treibgases können besonders kurze Reaktionszeiten bis zur vollen Entfaltung der Heizwirkung erreicht werden. Dadurch ergibt sich ein relativ großer Bereich für die Einstellung der Treibgastemperatur.

In speziellen Weiterbildungen können die elektrischen Heizelemente eine oder mehrere Heizplatten und/oder einen oder mehrere Heizdrähte umfassen. Dabei kann das jeweilige Heizelement entweder direkt in den Treibgasstrom ragen oder aber indirekt andere, mit dem Treibgasstrom direkt in Verbindung stehende Bauteile aufheizen.

Bei einer besonders bevorzugten, äußerst einfach zu realisierenden Ausführungsform ist im Treibgastrom zum Luftsack mindestens eine (an sich bekannte) Filtervorrichtung angeordnet, die erfindungsgemäß mit der Heizvorrichtung verbunden ist und somit durch diese temperiert werden kann. Da das Treibgas in jeden Falle durch die Fitervorrichtung strömen muß und von dieser in der Regel abgekühlt wird, kann, wie bereits oben geschildert, durch die Steuerung der Temperaturdifferenz zwischen heißem Treibgas relativ dazu kühler Filtervorrichtung der Kühleffekt auf das Treibgas und damit die Treibgastemperatur gesteuert werden.

Bei einer vorteilhaften Weiterbildung dieser Ausführungsform ist vorgesehen, daß die Filtervorrichtung elektrisch leitende Teile wie z.B. ein metallisches Sieb und/oder ein metallisches Gehäuse umfaßt, die als elektrischer Widerstand wirken, und daß zumindest eines der elektrisch leitenden Teile regelbar mit einer elektrischen Energiequelle verbunden ist. Im allereinfachsten Falle muß lediglich eine elektrische Zuleitung zu den entsprechenden metallischen Teilen der Filtervorrichtung vorgesehen werden, die an ihrem anderen Ende beispielsweise mit dem Pluspol der Batterie des Fahrzeuges verbunden sein kann, wobei die metallischen Teile der Filtervorrichtung elektrisch an dem Massepotential des Fahrzeugs angeschlossen sind. Variabler sind weiter verbesserte Ausführungsformen, bei denen der zugeführte Strom bzw. die zugeführte Spannung und damit die elektrische Heizenergie mittels einer Steuerungseinrichtung variiert werden kann.

In den Rahmen der Erfindung fällt auch ein Verfahren zum Betrieb eines Gasgenerators eines Aufprallschutzsystems für Fahrzeuginsassen, in welchem ein unter Druck stehendes Treibgas zum Aufblasen des Luftsackes eines Airbagsystems erzeugt wird, welches durch einen in einer Filterkammer angeordneten Filter und eine Ausströmöffnung in den Luftsack gelangt, bei dem das Treibgas auf seinem weg von einer Umlenkvorrichtung derart abgelenkt wird, daß je nach Bedarf ein größerer oder ein kleinerer Strömungsweg des Treibgases durch den Filter erzwungen wird.

Bei einer vorteilhaften Variante des erfindungsgemäßen Verfahrens ist vorgesehen, daß der Strömungsweg des Treibgases durch den Filter in Abhängigkeit von der Umgebungstemperatur des Airbagsystems und/oder vom Gewicht des hinter dem Aufprallschutzsystem sitzenden Fahrzeuginsassen und/oder von dessen Sitzposition und/oder vom voraussichtlichen Auftreffort und/oder der Auftreffenergie seines Kopfes temperiert wird. Damit kann das Aufblasverhalten des Airbagsystems optimal auf die jeweils aktuellen Gegebenheiten eingestellt werden.

Besonders bevorzugt ist eine Variante des erfindungsgemäßen Verfahrens, bei der das Treibgase auf seinem Weg in den Luftsack mittels einer Heizvorrichtung temperiert wird.

Bei einer weiteren vorteilhaften Verfahrensvariante erfolgt die Temperierung des Treibgases einfach durch elektrisches Aufheizen einer oder mehrerer Heizelemente, vorzugsweise durch Erhitzen des Filters.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:

Fig. 1  einen schematischen Längsschnitt durch eine ringförmige Ausführung des erfindungsgemäßen Gasgenerators;

Fig. 2  einen Ausschnitt aus der linken Seite von Fig. 1 mit der verschiebbaren Platte in einer Extremstellung, bei der der direkte Gasströmungsweg freigegeben wird;

Fig. 3  einen Ausschnitt wie in Fig. 2, aber mit der verschiebbaren Platte in ihrer Ruhestellung, in der der direkte Gasströmungsweg vollständig versperrt ist;

Fig. 4  einen schematischen Längsschnitt durch eine rohrförmige Ausführung des erfindungsgemäßen Gasgenerator;

Fig. 5  einen Ausschnitt aus der rechten Seite von Fig. 4 mit der verschiebbaren Platte in einer Extremstellung, bei der der direkte Gasströmungsweg freigegeben wird;

Fig. 6  einen schematischen Längsschnitt durch einen erfindungsgemäßen Hybrid-Gasgenerator;

Fig. 7  einen Ausschnitt aus Fig. 6 mit einer verschiebbaren Platte in einer Extremstellung, bei der der direkte Gasströmungsweg freigegeben wird;

Fig. 8  einen schematischen Längsschnitt durch einen erfindungsgemäßen Flüssiggasgenerator; und

Fig. 9  einen Ausschnitt aus der rechten Seite von Fig. 8 mit einer verschiebbaren Platte in einer Extremstellung, bei der der direkte Gasströmungsweg freigegeben wird.

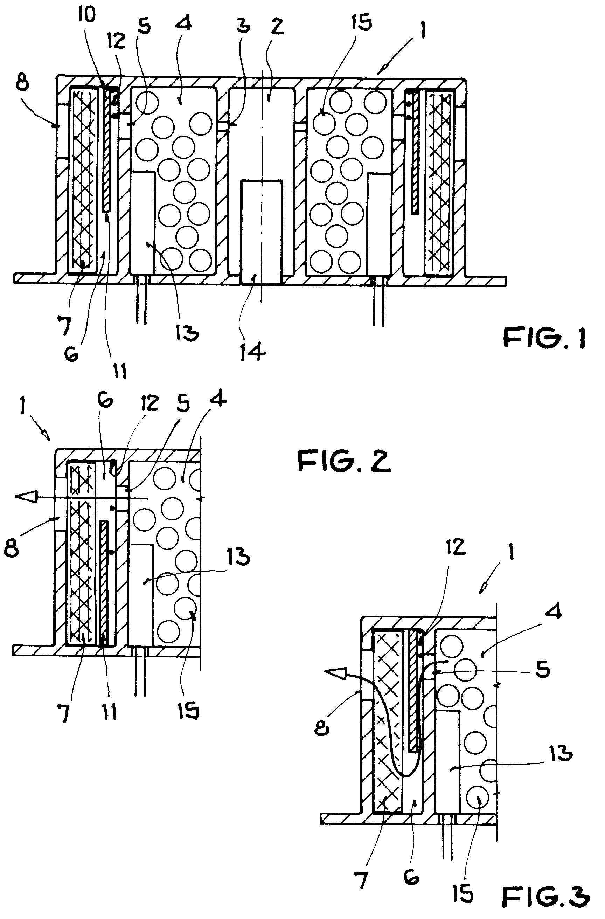

Bei dem in der Fig. 1 gezeigten Ausführungsbeispiel ist ein schematischer Vertikalschnitt durch einen Gasgenerator 1 zu erkennen, bei dem in einer zentralen Anzündkammer 2 im Bedarfsfall mittels einer Anzündeinheit 14 eine Zündladung gezündet wird, deren heiße Gase über eine Verbindungsöffnung 3 in eine Brennkammer 4 eintreten, wo Feststoff-Brenntabletten 15 gelagert sind, die durch die heißen Zündgase entzündet werden und ihrerseits beim Verbrennen ein heißes Treibgas erzeugen, das über eine Austrittsöffnung 5 in eine Filterkammer 6 und durch ein Filter 7 hindurch über eine Ausströmöffnung 8 einem in der Zeichnung nicht dargestellten Luftsack eines Airbagsystems zugeführt wird. Der dargestellte Gasgenerator 1 ist ringförmig aufgebaut, so daß sich die Merkmale in der linken Seite der Figur auf der rechten Seite identisch wiederholen.

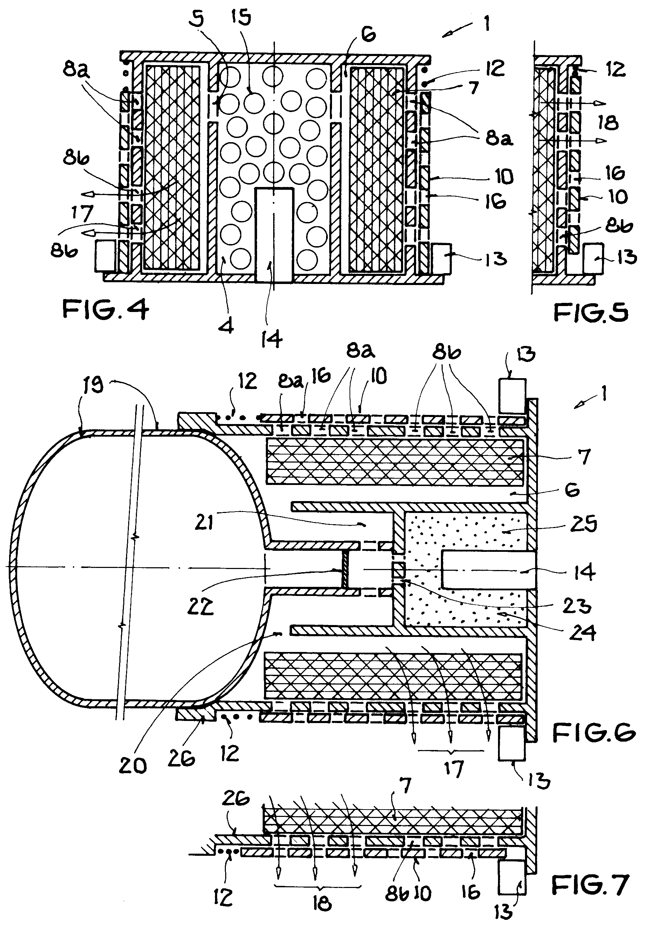

Erfindungsgemäß ist in der Filterkammer 6 auf dem weg des Treibgases zwischen der Austrittsöffnung 5 aus der Brennkammer 4 und dem Filter 7 eine Umlenkvorrichtung 10 vorgesehen, die eine rohrförmige Platte 11 umfaßt, die parallel zur Filteroberfläche verschiebbar ist und weder an der Austrittsöffnung noch an dem Filter anliegt. Mittels einem einseitig zwischen der Platte 11 und einer Innenwand der Filterkammer 6 angeordneten Federelement 12 wird die Platte in einer den direkten Gasströmungsweg vollständig versperrenden Ruhelage gehalten, was in Fig. 3 näher dargestellt ist. Damit wird ein maximaler Durchströmungsweg des Treibgases durch den Filter 7 erreicht.

In Fig. 2 ist die Platte 11 durch Krafteinwirkung von einem Elektromagneten 13 aus ihrer Ruhelage in ihre andere Extremstellung verschoben, in welcher der direkte Gasströmungsweg zwischen Austrittsöffnung 5 und Filter 7 vollständig freigegeben wird. Damit wird ein besonders kurzer Durchströmungsweg des Treibgases durch den Filter 7 erreicht, was eine entsprechend geringe Abkühlungswirkung des Treibgases zur Folge hat.

Durch entsprechende Ansteuerung des Elektromagneten mit Stromimpulsen von außen kann die Platte 11 gegen die Federkraft des Federelementes 12 in jede beliebige Zwischenstellung zwischen den beiden Extremlagen gebracht werden, wodurch eine entsprechende kontinuierliche Variation des Gasströmungsweges durch den Filter 7 und damit der Abkühlungswirkung erreicht werden kann.

Das in Figur 4 gezeigte Ausführungsbeispiel stellt einen Gasgenerator mit einer zylinderförmigen Brennkammer 4 und eine dieselbe konzentrisch umgebende Filterkammer 6 dar, bei dem mittels einer in der Brennkammer 4 angeordneten Anzündeinheit 14 die in derselben gelagerten Feststoff-Brenntabletten 15 entzündet werden, die ihrerseits beim Verbrennen ein heißes Treibgas erzeugen, das über an einem Ende der Brennkammer 4 angeordneten Brennkammeröffnungen 5 in die Filterkammer 6 einströmen und durch ein ringförmiges Filter 7 hindurch über in axialer Richtung angeordnete Filterausströmöffnungen 8 aus dem Gasgenerator ausströmen und damit einen in der Zeichnung nicht dargestellten Luftsack eines Airbagsystems aufblasen.

Dabei kann das Treibgas verschiedene Strömungswege durch das Filter 7 und die Filterkammeraustrittsöffnungen 8 einschlagen. So kann beispielsweise das Treibgas einen kurzen Strömungsweg nehmen, indem es ausgehend von der Brennkammeraustrittsöffnung 5 nahezu radial in den Filter 7 eintritt und in die zu der Brennkammeraustrittsöffnung 5 benachbarten Filterkammeraustrittsöffnungen 8a ebenfalls nahezu radial aus dem Gasgenerator 1 in den Luftsack austritt. Daneben kann das Treibgas, nachdem es aus der Brennkammeraustrittsöffnung 5 und in den Filter 7 eingetreten ist, axial bis nahezu an das gegenüberliegende Ende der Filterkammer strömen und durch die dort liegenden Filterkammerausströmöffnungen 8b (vgl. Bezugszeichen 17) aus dem Gasgenerator 1 austreten.

Eine erfindungsgemäße Umlenkvorrichtung 10, die rohrförmig und parallel zur Filterkammeroberfläche verschiebbar ausgebildet ist, weist derart verteilte Durchtrittsöffnungen 16 auf, daß entweder der direkte, d. h. also der kürzeste Gasströmungsweg über die Fiterkammeraustrittsöffnungen 8a freigehalten ist (vgl. Bezugszeichen 18 in Figur 5) oder dieser versperrt ist und dagegen die anderen Filterkammeraustrittsöffnungen 8b freigegeben werden, das Treibgas also den langen Gasströmungsweg (vgl. Bezugszeichen 17 in Figur 4) einschlägt.

Mittels einem einseitig zwischen der Umlenkvorrichtung 10 und einer die Stirnseite der Filterkammer 6 verschließenden Wand angeordneten Federelement 12 wird die Umlenkvorrichtung 10 in einer den direkten Gasströmungsweg vollständig versperrenden Ruhelage gehalten, wie dies in Figur 4 dargestellt ist. In dieser Stellung wird der längste Strömungsweg über die nahezu gesamte axiale Länge des Filters 7 eingestellt.

In Figur 5 ist die Umlenkvorrichtung 10 durch Krafteinwirkung von einem Elektromagneten 13, der außerhalb in unmittelbarer Nähe der Umlenkvorrichtung 10 angeordnet ist, aus ihrer Ruhelage in ihre andere Extremstellung verschoben, in welcher die direkten, der Brennkammeraustrittsöffnung 5 benachbarten Filterkammerausströmöffnungen 8a vollständig freigegeben wird. Damit wird ein kurzer Durchströmungsweg des Treibgases durch den Filter 7 erreicht, wodurch eine entsprechend geringere Abkühlungswirkung des Treibgases erzielt wird.

In entsprechender Weise wie bei dem Ausführungsbeispiel gemäß den Figuren 1 bis 3 kann mittels dieses Elektromagneten 13 jede beliebige Zwischenstellung zwischen den beiden Extremlagen eingestellt werden.

Das Ausführungsbeispiel gemäß den Figuren 6 und 7 unterscheidet sich von den vorhergehenden dadurch, daß das Treibgas zum Befüllen eines Luftsackes in einem Druckgasbehälter 19 gespeichert ist. Dieser Druckgasbehälter 19 weist eine Öffnung auf, die von einer Berstmembran 22 verschlossen wird.

Gegenüber dieser Berstmembran 22 befindet sich eine einen pyrotechnischen Treibsatz 25 enthaltende Brennkammer 24, aus der über eine Brennkammeröffnung 23 bei Entzündung des pyrotechnischen Treibsatzes 25 mittels eines Anzünders 14 heiße Treibgase austreten und auf die Berstmembran 22 auftreffen, wodurch dieselbe aufgeschmolzen wird.

Infolgedessen tritt sowohl das in dem Druckgasbehälter 19 gespeicherte Kaltgas als auch das heiße Treibgas in eine Diffusorkammer 21 aus, um sich darin zu vermischen.

Die Brennkammer 24 als auch die Diffusorkammer 21 sind zylinderförmig mit gleichem Durchmesser ausgebildet und axial hintereinander angeordnet und von einer dieselben ringförmig umgebenden Filterkammer 6 umgeben, die von einem Filterrohr 26 gebildet wird. In diesem Filterkammerrohr 26 sind auf diametral gegenüberliegenden Seiten über die nahezu gesamte Länge in axialer Richtung Filterkammerausströmöffnungen 8 vorgesehen. Ein ringförmig geformter Filter 7 füllt nahezu die gesamte Filterkammer 6 aus.

Die in der Diffusorkammer 21 gebildete Treibgasmischung tritt aus einer Diffusorkammeröffnung 20 an einem zum Druckgasbehälter 19 benachbarten Ende der Filterkammer 6 in dieselbe und den Filter 7 ein und kann entweder über einen kurzen Gasströmungsweg über die benachbarten Filterkammeraustrittsöffnungen 8a aus der Filterkammer austreten oder über am gegenüberliegenden Ende der Filterkammer angeordnete Filterkammeröffnungen 8b entsprechend einem langen Gasströmungsweg ebenfalls aus der Filterkammer 6 austreten.

Eine erfindungsgemäße rohrförmig ausgebildete Umlenkvorrichtung 10 umschließt das Filterrohr 26 und ist in entsprechender weise wie beim Gasgenerator gemäß den Figuren 4 und 5 ausgebildet. Damit ist auch diese Umlenkvorrichtung 10 parallel zur Filterkammeroberfläche verschiebbar, wobei deren Austrittsöffnungen 16 so angeordnet sind, daß in Ruhestellung der Umlenkvorrichtung 10 gemäß Figur 6 der kurze Gasströmungsweg versperrt wird und das Treibgasgemisch einen langen Weg in axialer Richtung durch den Filter 7 zurücklegen muß, bevor es durch die an der gegenüberliegenden Seite angeordneten Filterkammeraustrittsöffnungen 8b und den entsprechenden Öffnungen 16 in der Umlenkvorrichtung 10 (vgl. Bezugszeichen 17) in den nicht dargestellten Luftsack austreten kann.

In Figur 7 wird die andere Extremstellung der Umlenkvorrichtung 10 gezeigt, in die dieselbe aufgrund der Krafteinwirkung eines Elektromagneten 13 kommt. In dieser Extremstellung wird der direkte Gasströmungsweg durch die zu den Diffusorkammeraustrittsöffnungen 20 benachbarten Filterkammeröffnungen 8a vollständig freigegeben (vgl. Bezugszeichen 18) und die an dem gegenüberliegenden Ende angeordneten Filterkammeraustrittsöffnungen 8b durch die Umlenkvorrichtung 16 versperrt.

Auch bei diesem Ausführungsbeispiel eines erfindungsgemäßen Gasgenerators kann dessen Umlenkvorrichtung 10 in jede beliebige Zwischenstellung zwischen den beiden Extremlagen gesteuert werden.

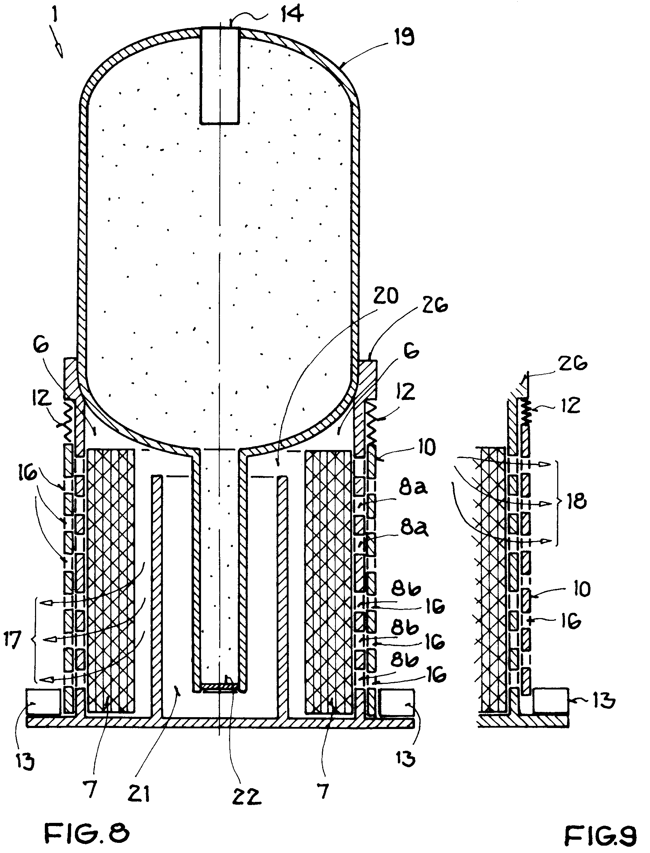

Das letzte Ausführungsbeispiel gemäß den Figuren 8 und 9 stellt einen Flüssiggasgenerator dar, bei dem ein brennbares, treibgaserzeugendes Flüssiggas in einem Gasdruckbehälter 19 gespeichert ist. Dieser Gasdruckbehälter 19 weist gemäß Figur 8 einen flaschenförmigen Fortsatz auf, der von einer Berstmembran 22 verschlossen ist.

Wird das in dem Druckgasbehälter 19 gespeicherte Flüssiggas mittels einer Anzündeinheit 14 entzündet, entsteht aufgrund des Verbrennungsvorganges ein die Berstmembran 22 aufberstendes Treibgas, das aus dem Druckgasbehälter 19 in eine Diffusorkammer 21 einströmt, die den flaschenförmigen Fortsatz des Druckgasbehälters 19 ringförmig umschließt.

Diese Diffusorkammer 21 wird von einer hohlzylinderförmigen Filterkammer 6 umschlossen und ist in entsprechender Weise wie diejenige des Ausführungsbeispieles nach Figur 6 ausgestaltet.

Die heißen Treibgase treten aus der Diffusorkammer 21 über eine Diffusorkammeraustrittsöffnung 20 in das zum Druckgasbehälter 19 benachbarten Ende der Filterkammer 6 in einen Filter 7 ein. Von dort kann entsprechenderweise wie bei dem Ausführungsbeispiel nach Figur 6, das Treibgas entweder einen kurzen weg über die zur Diffusorkammeraustrittsöffnung 20 benachbarten Filterkammeraustrittsöffnungen 8a ausströmen (vgl. Bezugszeichen 18 in Figur 9) oder aber axial entlang des Filters 7 strömen, um dann am anderen Ende über die Filterkammeraustrittsöffnungen 8b (vgl. Bezugszeichen 17 in Figur 8) aus dem Gasgenerator 1 auszutreten.

Um entweder den kurzen oder den langen Gasströmungsweg freizugeben, ist in entsprechender Weise, wie bei dem Ausführungsbeispiel gemäß Figur 6 oder 4, eine Umlenkvorrichtung 10 mit entsprechenden Durchtrittsöffnungen 16 vorgesehen, die parallel zur Filterkammeroberfläche verschiebbar ist.

Diese Umlenkvorrichtung 10 kann mittels eines Federelementes 12 sowie eines Elektromagneten 13 so gesteuert werden, daß entweder der kurze Gasströmungsweg über die Filterkammeraustrittsöffnungen 8a oder der lange Gasströmungsweg über die Filterkammeröffnungen 8b versperrt ist oder jede beliebige Zwischenlage eingenommen werden kann.

In Figur 9 wird die Umlenkvorrichtung 10 mittels des Federelementes 12 in einer Ruhelage gehalten, so daß der direkte Gasströmungsweg 18 durch die Filterkammeröffnungen 8a freigegeben wird. In Figur 8 dagegen wird die Umlenkvorrichtung 10 aufgrund der Krafteinwirkung des Elektromagneten 13 aus der Ruhelage in die andere Extremstellung verschoben, in welcher der indirekte, also der lange Gasströmungsweg 17 durch die Filterkammeraustrittsöffnungen 8b freigegeben wird (vgl. Bezugszeichen 17).

Bei einer in den Zeichnungen nicht dargestellten Ausführungsform des erfindungsgemäßen Gasgenerators 1 führen Stromleitungen vom Filter 7 zu einer elektrischen Energiequelle, die in der Zeichnung ebenfalls nicht dargestellt ist. Dadurch kann der Filter 7 aufgeheizt werden. Die für den Druck des Luftsackes wesentliche Treibgastemperatur kann damit noch variabler eingestellt werden und läßt sich durch entsprechendes Aufheizen des Filters 7 auf einfache weise zusätzlich variieren. Dadurch können besonders fein abgestufte unterschiedliche Füllgrade des Luftkissens innerhalb sehr großer Grenzen erzeugt und somit die Auffangwirkung auf die tatsächliche kinetische Energie eines Fahrzeuginsassen optimal abgestimmt werden.

Durch die Anwendung von elektrischer Energie zum Aufheizen des Filters 7 werden extrem kurze Reaktionszeiten bis zur Erreichung der Endtemperatur erzielt. Dadurch ergibt sich ein relativ großer Bereich für die optimale Einstellung der Treibgastemperatur. Der deutliche Einfluß der Umgebungstemperatur auf die Leistung des Airbagsystems kann durch dieses Prinzip entscheidend vermindert werden.

In der Zeichnung ebenfalls nicht dargestellt sind Sensoren, mit denen aufgrund äußerer Parameter, wie beispielsweise Umgebungstemperatur, Gewicht- und Sitzposition des Fahrzeuginsassen usw. die dem Filter 7 bzw. dem Elektromagneten 13 zugeführte elektrische Leistung und damit die Endtemperatur des zu temperierenden Treibgasstromes berücksichtigt werden können.

Dieses Prinzip eines beheizbaren Filters kann aber ebenso in nicht dargestellten Ausführungsformen verwirklicht sein, bei denen anstelle des Filters oder zusätzlich dazu an anderen Stellen der Treibgasstrom beheizt wird. Dies kann beispielsweise durch Heizplatten, Heizdrähte oder andere Arten von aufheizbaren Heizelementen geschehen, die entweder direkt mit einer heißen Oberfläche in den Treibgasstrom ragen, oder diesen indirekt durch Erhitzen von Begrenzungsflächen des Treibgasstromes temperieren.

**Patentansprüche**

1. Gasgenerator (1) eines Aufprallschutzsystems für Fahrzeuginsassen, der ein unter Druck stehendes Treibgas zum Aufblasen des Luftsackes eines Airbagsystems erzeugt, dadurch gekennzeichnet, daß auf dem Weg des Treibgases zum Luftsack eine Umlenkvorrichtung (10) zur Beeinflussung des Strömungsweges des in den Luftsack strömenden Treibgases vorgesehen ist.

2. Gasgenerator nach Anspruch 1, dadurch gekennzeichnet, daß die Umlenkvorrichtung (10) eine Steuerungseinrichtung aufweist, die in Abhängigkeit von Signalen aus einem oder mehreren externen Sensoren die Umlenkvorrichtung (10) veranlaßt, das vorbeiströmende Treibgas auf einem entsprechend längeren oder kürzeren Strömungsweg zu dem Luftsack zu lenken.

3. Gasgenerator nach Anspruch 2, dadurch gekennzeichnet, daß ein Temperatursensor mit der Steuerungseinrichtung verbunden ist, der in Abhängigkeit von der Umgebungstemperatur des Airbagsystems elektrische oder mechanische Signale an die Steuerungseinrichtung abgibt.

4. Gasgenerator nach Anspruch 3, dadurch gekennzeichnet, daß der Temperatursensor ein Bimetallelement umfaßt.

5. Gasgenerator nach einem der Ansprüche 2 bis 4, dadurch gekennzeichnet, daß ein Gewichtssensor mit der Steuerungseinrichtung verbunden ist, der in Abhängigkeit vom jeweiligen Gewicht des hinter dem Aufprallschutzsystem sitzenden Fahrzeuginsassen Signale an die Steuerungseinrichtung abgibt.

6. Gasgenerator nach einem der Ansprüche 2 bis 5, dadurch gekennzeichnet, daß ein Positionssensor mit der Steuerungseinrichtung verbunden ist, der in Abhängigkeit von der jeweiligen Sitzposition, insbesondere in Abhängigkeit der Position des Kopfes des hinter dem Aufprallschutzsystem sitzenden Fahrzeuginsassen Signale an die Steuerungseinrichtung abgibt.

7. Gasgenerator nach einem der vorhergehenden Ansprüche, dadurch gekennzeichnet, daß das Treibgas pyrotechnisch in einer Brennkammer (4) erzeugt wird, daß auf dem Weg des Treibgases zwischen den Austrittsöffnungen (5) aus der Brennkammer (4) und dem Luftsack die Umlenkvorrichtung (10) angeordnet ist.

8. Gasgenerator nach Anspruch 7, dadurch gekennzeichnet, daß sich an die Brennkammer (4) eine Filterkammer (6) mit einem Filter (7) anschließt, und daß auf dem Weg des Treibgases zwischen den Austrittsöffnungen (5) aus der Brennkammer (4) und dem Filter (7) die Umlenkvorrichtung angeordnet ist.

9. Gasgenerator nach Anspruch 7, dadurch gekennzeichnet, daß sich an die Brennkammer (4) eine einen Filter (7) aufweisende Filterkammer (6) anschließt, aus der das Treibgas über Ausströmöffnungen (8) in den Luftsack strömt, und daß zwischen diesem Filter (7) und dem Luftsack die Umlenkvorrichtung (10) angeordnet ist.

10. Gasgenerator nach Anspruch 9, dadurch gekennzeichnet, daß die Brennkammer (4) und Filterkammer (6) rohrförmig ausgebildet und konzentrisch zueinander angeordnet sind, daß das Treibgas einen direkten Gasströmungsweg über die Brennkammeraustrittsöffnungen (5) radial durch den Filter (7) und Filterkammeraustrittsöffnungen (8a) in den Luftsack nehmen kann, daß das Treibgas einen indirekten Gasströmungsweg über die Brennkammeraustrittsöffnungen (5) axial durch den Filter (7) und anschließend radial durch Filterkammeraustrittsöffnungen (8b) in den Luftsack nehmen kann, und daß die Umlenkvorrichtung (10) derart ausgebildet ist, daß entweder der direkte Gasströmungsweg oder der indirekte Gasströmungsweg freigegeben wird.

11. Gasgenerator nach einem der Ansprüche 1 bis 6, dadurch gekennzeichnet, daß der Gasgenerator (1) als Hybrid- oder Flüssiggasgenerator mit einer Druckgasflasche (15) ausgebildet ist, daß das Treibgas nach dem Ausströmen aus der Druckgasflasche (15) in eine Diffusorkammer (21) strömt, daß sich an die Diffusorkammer (21) eine rohrförmige einen Filter (7) aufweisende Filterkammer (6) anschließt, und daß zwischen der Filterkammer (6) und dem Luftsack die Umlenkvorrichtung (10) angeordnet ist.

12. Gasgenerator nach Anspruch 11, dadurch gekennzeichnet, daß das Treibgas einen direkten Gasströmungsweg über Diffusorkammeraustrittsöffnungen (20) radial durch den Filter (7) und Filterkammeraustrittsöffnungen (8a) in den Luftsack nehmen kann, daß das Treibgas einen indirekten Gasströmungsweg über Diffusorkammeraustrittsöffnungen (17) axial durch den Filter (7) und anschließend radial durch Filterkammeraustrittsöffnungen (8b) in den Luftsack nehmen kann, und daß die Umlenkvorrichtung (10) derart ausgebildet ist, daß entweder der direkte Gasströmungsweg oder der indirekte Gasströmungsweg freigegeben wird.

13. Gasgenerator nach Anspruch 8, dadurch gekennzeichnet, daß die Umlenkvorrichtung (10) eine in der Filterkammer (6) zwischen der Austrittsöffnung (5) aus der Brennkammer (4) und dem Filter (7) angeordnete, parallel zur Filteroberfläche verschiebbare Platte (11) umfaßt, die weder an der Austrittsöffnung (5) noch an dem Filter (7) anliegt, und die in einer Extremstellung einen direkten Gasströmungsweg zwischen Austrittsöffnung (5) und Filter (7) vollständig versperrt und in einer anderen Extremstellung den direkten Gasströmungsweg zwischen Austrittsöffnung (5) und Filter (7) vollständig freigibt.

14. Gasgenerator nach Anspruch 10 oder 12, dadurch gekennzeichnet, daß die Umlenkvorrichtung (10) eine in der Filterkammer (6) zwischen dem Filter (7) und den Filteraustrittsöffnungen (8) oder eine außerhalb der Filterkammer (7) vor den Filteraustrittsöffnungen (8) angeordnete, parallel zur Filterkammerwand verschiebbare Platte (11) umfaßt, und die in einer Extremstellung den direkten Gasströmungsweg vollständig versperrt und in einer anderen Extremstellung den indirekten Gasströmungsweg vollständig freigibt.

15. Gasgenerator nach Anspruch 13 oder 14, dadurch gekennzeichnet, daß die Platte (11) mittels einem einseitig zwischen der Platte (11) und einer Innen- bzw. Außenwand der Filterkammer (6) angeordneten Federelement (12) in einer den direkten Gasströmungsweg vollständig versperrenden Ruhelage gehalten wird, und daß eine Zugvorrichtung vorgesehen ist, mit der die Platte (11) in jede beliebige Zwischenstellung dieser Ruhelage und der anderen Extremstellung, in welcher der direkte Gasströmungsweg vollständig freigegeben ist, verschoben werden kann.

16. Gasgenerator nach Anspruch 15, dadurch gekennzeichnet, daß die Zugvorrichtung einen von außen ansteuerbaren, vorzugsweise in der Brennkammer (4) bzw. außerhalb des Gasgenerators (1) angeordneten Elektromagneten (13) umfaßt.

17. Gasgenerator nach einem der Ansprüche 13 bis 16, dadurch gekennzeichnet, daß der Gasgenerator (1) ringförmig aufgebaut ist, und daß die Platte (11) als ein die ringförmige Brennkammer (4), den ringförmigen Filter (7) bzw. die ringförmige Filterkammer (6) umgebendes Rohrstück ausgebildet ist.

18. Gasgenerator nach Anspruch 17, dadurch gekennzeichnet, daß das Rohrstück an denjenigen Stellen seines Umfangs, die nicht einer Austrittsöffnung (5, 8) gegenüberliegen, großflächige Ausnehmungen aufweist.

19. Gasgenerator nach einem der vorhergehenden Ansprüche, dadurch gekennzeichnet, daß auf dem Weg des Treibgases zum Luftsack eine Heizvorrichtung zur Temperierung des vorbeiströmenden Treibgases vorgesehen ist.

20. Gasgenerator nach Anspruch 19, dadurch gekennzeichnet, daß die Heizvorrichtung elektrisch aufheizbare Heizelemente umfaßt.

21. Gasgenerator nach Anspruch 20, dadurch gekennzeichnet, daß die Heizelemente eine oder mehrere Heizplatten und/oder einen oder mehrere Heizdrähte umfassen.

22. Gasgenerator nach einem der Ansprüche 19 bis 21, dadurch gekennzeichnet, daß die Heizvorrichtung mit dem Filter (7) verbunden ist und diesen temperieren kann.

23. Gasgenerator nach Anspruch 22, dadurch gekennzeichnet, daß der Filter (7) elektrisch leitende Teile wie z.B. ein metallisches Sieb und/oder ein metallisches Gehäuse umfaßt, die als elektrischer Widerstand wirken, und daß zumindest eines der elektrisch leitenden Teile regelbar mit einer elektrischen Energiequelle verbunden ist.

24. Verfahren zum Betrieb eines Gasgenerators (1) eines Aufprallschutzsystems für Fahrzeuginsassen, der ein unter Druck stehendes Treibgas zum Aufblasen des Luftsackes eines Airbagsystems erzeugt, welches durch einen in einer Filterkammer (6) angeordneten Filter (7) und eine Ausströmöffnung (8) bzw. Ausströmöffnungen (8a, 8b) in den Luftsack gelangt, dadurch gekennzeichnet, daß das Treibgas auf seinem Weg von einer Umlenkvorrichtung (10) derart abgelenkt wird, daß je nach Bedarf ein größerer oder ein kleinerer Strömungsweg des Treibgases durch den Filter (7) erzwungen wird.

25. Verfahren nach Anspruch 24, dadurch gekennzeichnet, daß der Strömungsweg des Treibgases durch den Filter (7) in Abhängigkeit von der Umgebungstemperatur des Airbagsystems und/oder vom Gewicht des hinter dem Aufprallschutzsystem sitzenden Fahrzeuginsassen und/oder von dessen Sitzposition und/oder vom voraussichtlichen Auftreffort und/oder der Auftreffenergie seines Kopfes gesteuert wird.

26. Verfahren nach Anspruch 24 oder 25, dadurch gekennzeichnet, daß das Treibgas auf seinem Weg in den Luftsack mittels einer Heizvorrichtung temperiert wird.

27. Verfahren nach Anspruch 26, dadurch gekennzeichnet, daß die Temperierung durch elektrisches Aufheizen eines oder mehrerer Heizelemente, vorzugsweise durch Erhitzen des Filters (7) erfolgt.

FIG. 1

FIG. 2

FIG. 3

FIG.4

FIG.5

FIG.6

FIG.7

EP 0 773 146 A2

FIG.8

FIG.9